# EUROPÄISCHE PATENTANMELDUNG

(11) **EP 0 903 958 A2**
(43) Veröffentlichungstag der Anmeldung: **24.03.1999**
(21) Anmeldenummer: 98440174.5
(22) Anmeldetag: 14.08.1998
(51) Int. Cl.: H04Q 11/04, H04Q 3/68

(54) **Verfahren und Vorrichtungen zum Aufbau von Punkt-zu-Mehrpunkt-Verbindungen und Mehrpunkt-zu-Punkt-Verbindungen**

(30) Priorität: 20.09.1997 DE 19741577
(71) Anmelder: ALCATEL, 75088 Paris (FR)
(72) Erfinder: Wolf, Michael, Dr., 74395 Mundelsheim (DE)
(74) Vertreter: Schätzle, Albin, Dipl.-Phys.

(57) **Zusammenfassung**

Die vorliegende Erfindung betrifft ein Verfahren und Vorrichtungen zum Aufbau von Punkt-zu-Mehrpunkt-Verbindungen (A14, A33, A34) und Mehrpunkt-zu-Punkt-Verbindungen (B14, B15, B35) in einem Koppelfeld aus einer Mehrzahl von Stufen (I, II, III) mit jeweils einer Mehrzahl von Schaltmodulen (11-15, 21-25, 31-35). Dazu wird vorgeschlagen, wenn in mindestens einer Stufe (II) Schaltmodule (21-25) vorhanden sind, die bauartbedingt zugleich Punkt-zu-Mehrpunkt-Verbindungen (A14, A33, A34) als auch Mehrpunkt-zu-Punkt-Verbindungen (B14, B15, B35) schalten können, Punkt-zu-Mehrpunkt-Verbindungen (A14, A33, A34) in Schaltmodulen (25) zu schalten, bei denen bereits mehr Eingänge als Ausgänge mit Verbindungen belastet sind, und Mehrpunkt-zu-Punkt-Verbindungen (B14, B15, B35) von Schaltmodulen (24) zu schalten, bei denen bereits mehr Ausgänge als Eingänge mit Verbindungen belastet sind

## Beschreibung

Die vorliegende Erfindung betrifft ein Verfahren zum Aufbau von Punkt-zu-Mehrpunkt-Verbindungen und Mehrpunkt-zu-Punkt-Verbindungen in einem Koppelfeld gemäß dem Oberbegriff des Anspruchs 1, ein Koppelfeld hierfür gemäß dem Oberbegriff des Anspruches 2, eine Steuereinrichtung hierfür gemäß dem Oberbegriff des Anspruches 3 und eine Vermittlungsstelle hierfür gemäß dem Oberbegriff des Anspruches 4

Die Aufspaltung einer ankommenden Verbindungsleitung in einem Koppelfeld zu mehreren weiterführenden Verbindungsleitungen und die Zusammenkopplung von mehreren ankommenden Verbindungsleitungen in einem weiteren Koppelfeld zu einer gemeinsamen weiterführenden Verbindungsleitung sind aus der ITU-T Recommendation G.841 (DRAFT) "Types and Characteristics of SDH Network Protection Architectures", Version April 1995, Figur 5-7 (S. 51) auf dem Gebiet der SDH-Technik (Synchrone Digitale Hierarchie) bekannt. In den dort dargestellten Koppelfeldern wird je ein Koppelfeldeingang mit mehreren Koppelfeldausgängen durch eine Punkt-zu-Mehrpunkt-Verbindung und mehrere Koppelfeldeingänge mit einem Koppelfeldausgang durch eine Mehrpunkt-zu-Punkt-Verbindung verbunden. Die dargestellte Verwendung mindestens zweier unterschiedlicher und unabhängiger, also redundanter Verbindungswege erhöht die Übertragungssicherheit in Telekommunikationsnetzwerken oder Teilen davon. Ein durch Pfeile angedeutetes erstes Paar aus Datenquelle und Datensenke ist über ein erstes Koppelfeld ("Matrix Connection"), zwei redundante Übertragungswegpaare und ein zweites Koppelfeld ("Matrix Connection") mit einem zweiten Paar aus Datenquelle und Datensenke verbunden. Die genannten Koppelfelder sind Teile von SDH-Netzknoten, sogenannten "Crossconnects". Die paarweise Anordnung der Übertragungswege wird hier für eine Übertragung im Vollduplexbetrieb benötigt. Für eine Übertragung im Halbduplexbetrieb oder für eine unidirektionale Übertragung wäre nur je ein Kanal der Übertragungswegpaare erforderlich. Das zur Datenübertragung aktive Übertragungswegpaar wird als SNCw-Verbindung (Subnetwork Connection working) bezeichnet, das redundante Übertragungswegpaar als SNCp-Verbindung (Subnetwork Connection protection). Die Übertragung in einer Richtung auf je einem Kanal der gedoppelten Übertragungswegpaare wird im folgenden dargestellt. In der Gegenrichtung wird sinngemäß umgekehrt übertragen.

Ein von der ersten Datenquelle zu der zweiten Datensenke zu übertragender Datenstrom wird von dem ersten Koppelfeld dupliziert und der Datenstrom und sein Duplikat parallel auf je einem Kanal der redundanten Übertragungswege SNCp und SNCw zur Datensenke versandt. Unmittelbar vor der Datensenke werden der Datenstrom und dessen Duplikat von dem zweiten Koppelfeld auf den redundanten Übertragungswegen empfangen und zusammengekoppelt. Dabei werden Datenstrom und Duplikat auf ihre Qualität hin überprüft, so daß daraus, wenn es möglich ist, ein fehlerfrei empfangener Datenstrom ausgewählt und der Datensenke zugeleitet werden kann. Wenn nicht beide redundanten Übertragungswege zugleich ausfallen oder Störungen aufweisen, kann der Datenstrom in oben beschriebener Weise mit hoher Übertragungsgüte und Ubertragungssicherheit von der Datenquelle zur Datensenke übertragen werden.

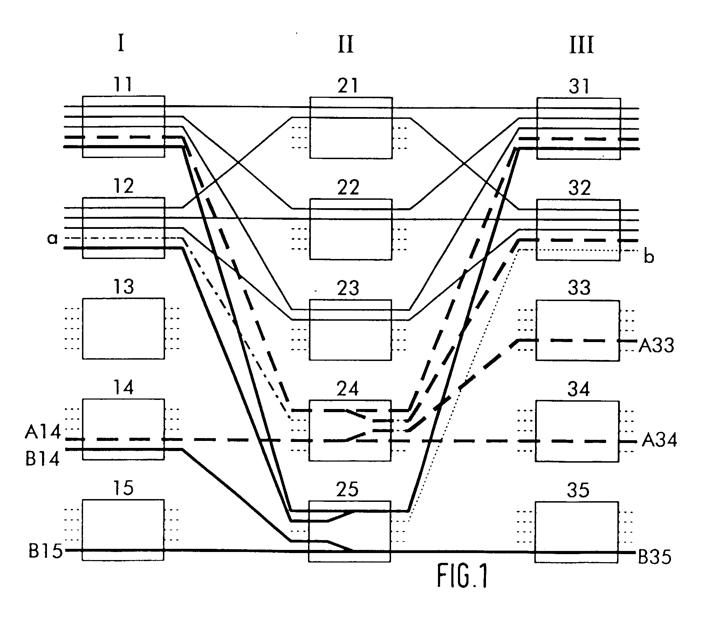

Anhand der Figur 1 wird zunächst eine Situation beschrieben, wie sie sich ohne Anwendung des erfindungsgemäßen Verfahrens ergeben kann. Die Figur 1 zeigt ein Koppelfeld in drei Stufen aus je fünf Schaltmodulen mit momentan genutzten Verbindungen zwischen den Schaltmodulen der drei Stufen. Das Koppelfeld besteht aus einer Eingangsstufe (I) mit fünf Schaltmodulen 11, 12, 13, 14, und 15, einer Zwischenstufe (II) mit fünf Schaltmodulen 21, 22, 23, 24 und 25 sowie einer Ausgangsstufe (III) mit fünf Schaltmodulen 31, 32, 33, 34 und 35. Jedes der jeweils fünf Schaltmodule der Eingangs- (I) und der Ausgangsstufe (III) ist mit jedem der fünf Schaltmodule der Zwischenstufe (II) über in der Figur nicht dargestellte Zwischenleitungen verbunden. Dargestellt sind jedoch Verbindungen, die über diese Zwischenleitungen laufen, so daß dadurch einige Zwischenleitungen indirekt erkennbar werden. Die Zwischen leitungen liegen also zwischen Eingangsstufe (I) und Zwischenstufe (II) und zwischen Zwischenstufe (II) und Ausgangsstufe (III). Eine Zwischenleitung besteht immer zwischen je einem Ausgang eines Schaltmodules einer Stufe und je einem Eingang eines Schaltmodules einer benachbarten Stufe. Eine solche Zwischenleitung wird in Figur 1 z.B. zwischen den Schaltmodulen 11 und 21 benutzt.

Die Schaltmodule haben im dargestellten Beispiel jeweils fünf Eingänge und fünf Ausgänge. Ein Eingang eines Schaltmodules kann innerhalb des Schaltmodules in wählbarer Weise mit mindestens einem Ausgang desselben Schaltmodules verbunden werden. Ein Ausgang eines Schaltmodules kann ebenfalls wählbar mit mindestens einem Eingang desselben Schaltmodules verbunden werden. Ein Schaltmodul kann jeweils bis zu fünf unabhängige Verbindungen zwischen je einem seiner Eingänge und je einem seiner Ausgänge zugleich schalten. Die Schaltmodule 11 und 31 weisen einen solchen Schaltzustand auf. In diesen wie auch den meisten anderen Schaltmodulen des Koppelfeldes ist eine direkte Durchschaltung der Ein- und Ausgänge durch horizontale Linien zwischen den Ein- und Ausgängen dargestellt. Dies soll lediglich einer einfachen Veranschaulichung dienen.

Wenn eine Verbindung durch das Koppelfeld hindurch von nur einem Eingang nur eines Schaltmodules der Eingangsstufe (I) zu nur einem Ausgang nur eines Schaltmodules der Ausgangsstufe (III) führt, so wird diese umkehrbar eindeutige Verbindung auch eine "Unicast-Verbindung" genannt. Die in Figur 1 geschalteten "Unicast-Verbindungen" sind durch dünne durchgezogene Linien dargestellt.

Möglich sind jedoch auch die eingangs beschriebenen Verbindungen, bei denen die vom Koppelfeld auf einem seiner Eingänge empfangenen Daten dupliziert und parallel auf mehrere seiner Ausgänge versandt werden. Hier werden derartige Konstellationen als Punkt-zu-Mehrpunkt-Verbindungen oder "Multicast-Verbindungen" bezeichnet. "Multicast-Verbindungen" sind in den Figuren mit dicken, gestrichelten Linien ausgeführt. Eine solche "Multicast-Verbindung" ist z.B. im Schaltmodul 24 geschaltet, die eingangsseitig zu Schaltmodul 11 und ausgangsseitig zu den Schaltmodulen 31 und 32 führt. Eine weitere "Multicast-Verbindung" führt vom Eingang A14 des Schaltmodules 14 über das Schaltmodul 24 zum Ausgang A33 des Schaltmodules 33 und zum Ausgang A34 des Schaltmodules 34.

In ähnlicher Weise können auch mehrere Eingänge eines Koppelfeldes mit einem einzigen seiner Ausgänge zu einer hier als Mehrpunkt-zu-Punkt-Verbindung oder auch "Merge-Verbindung" bezeichneten Verbindung zusammengekoppelt werden. "Merge-Verbindungen" werden in den Figuren mit dicken, durchgezogenen Linien dargestellt. Das Schaltmodul 25 koppelt eine solche "Merge-Verbindung" zusammen zwischen seinen Eingängen zu den Schaltmodulen 11 und 12 hin und seinem Ausgang zu Schaltmodul 31 hin. Eine weitere "Merge -Verbindung" besteht zwischen den Eingängen B14 und B15 der Schaltmodule 14 bzw. 15 über das Schaltmodul 25 zum Ausgang B35 des Schaltmodules 35. Bei einer "Merge-Verbindung" werden der Datenstrom und dessen Duplikat, die eingangsseitig vom Koppelfeld parallel empfangen worden sind, vom zusammenkoppelnden Schaltmodul auf ihre Qualität hin überprüft. Wenn der Datenstrom oder dessen Duplikat als fehlerfrei erkannt worden sind, wird ein einziger fehlerfreier Datenstrom ausgewählt und an einen einzigen Ausgang weitergeleitet. Wenn weder Datenstrom noch Duplikat fehlerfrei sind, könnte auch ein fehlerbehafteter, möglicherweise zusätzlich wegen seiner Fehlerhaftigkeit speziell markierter, Datenstrom dem Ausgang zugeführt werden.

Duplizierte Datenströme werden vorzugsweise auf unterschiedlichen Leitungsbündeln übertragen. Diese Leitungsbündel münden dann für ankommende Datenströme auf unterschiedlichen Schaltmodulen der Eingangsstufe (I) oder beginnen für abgehende Datenströme auf unterschiedlichen Schaltmodulen der Ausgangsstufe (III). "Merge-Verbindungen" werden vorteilhaft bereits in Schaltmodulen der Zwischenstufe (II) zusammengeschaltet, um nur Zwischenleitungen zwischen Eingangs- (I) und Zwischenstufe (II) und nicht zwischen Zwischen- (II) und Ausgangsstufe (III) mit duplizierten Datenströmen zu belasten. Ebenso ist es nützlich, die "Multicast-Verbindungen" erst in den Schaltmodulen der Zwischenstufe (II) aufzusplitten, da so nur die Zwischenleitungen zwischen Zwischen- (II) und Ausgangsstufe (III) duplizierte Datenströme führen müssen. Zusammenkopplung von "Merge-Verbindungen" und Aufsplittung von ,,Multicast-Verbindungen" können auch in Schaltmodulen anderer Stufen eines Koppelfeldes stattfinden, insbesondere auch bei Koppelfeldern mit mehr Stufen als im dargestellten Koppelfeld aus Figur 1. Auf jeden Fall ist eine möglichst frühe Zusammenkopplung und eine möglichst späte Aufsplittung vorteilhaft.

Aus der Anordnung der Verbindungen in Figur 1 ergibt sich für das Schaltmodul 24, daß durch die geringere Ausnutzung der Anzahl der Eingänge gegenüber der Anzahl der Ausgänge nur noch der Ausgang zum Schaltmodul 35 nutzbar bleibt. Dadurch kann die Verbindung a zwischen Schaltmodul 12 und 24 nur noch auf das Schaltmodul 35 und dessen Ausgänge weitergeführt werden, nicht aber z.B. auf die Ausgänge der anderen Schaltmodule der Ausgangsstufe (III). Der zur Zwischenstufe (II) führende Teil dieser "Unicast-Verbindung" ist durch eine strichpunktierte, dünne Linie in Figur 1 dargestellt. Es tritt eine Blockierung innerhalb des Koppelfeldes auf, wenn wegen eines Verbindungswunsches die in Figur 1 strichpunktiert dargestellte Verbindung a auf einen Ausgang der Schaltmodule 31- 34 geführt werden soll.

Eine ähnliche Problematik ergibt sich für die einzige noch nicht belegte Ausgangsleitung b aus dem Schaltmodul 32 heraus. Diese Leitung kann mit der in Figur 1 dargestellten Schaltanordnung über das Schaltmodul 25 erreicht werden. Das Schaltmodul 25 jedoch hat in Figur 1 nur noch einen einzigen Eingang frei, nämlich den zu Schaltmodul 13. Bei einem Verbindungswunsch von einem der freien Eingänge der übrigen Schaltmodule der Eingangsstufe (I) zur freien Ausgangsleitung b hin tritt eine weitere Blockierung auf.

Aufgabe der Erfindung ist es, in einem Koppelfeld der genannten Art Punkt-zu-Mehrpunkt-Verbindungen und Mehrpunkt-zu-Punkt-Verbindungen unter Berücksichtigung der jeweiligen Blockierungswahrscheinlichkeit aufzubauen.

Diese Aufgabe wird durch die technische Lehre des Anspruchs 1, des Anspruchs 2, des Anspruchs 3 und des Anspruchs 4 gelöst. Weitere vorteilhafte Ausgestaltungen der Erfindung sind dem abhängigen Anspruch und der Beschreibung zu entnehmen.

Im folgenden werden die Erfindung und ihre Vorteile anhand eines Ausführungsbeispiels unter Zuhilfenahme der Zeichnungen dargestellt.
- Figur 1: zeigt ein Beispiel eines Koppelfeldes mit einem der möglichen Schaltzustände, wie er sich ohne Anwendung des erfindungsgemäßen Verfahrens ergeben kann.
- Figur 2: zeigt das Beispiel des aus Figur 1 bekannten Koppelfeldes mit einem gegenüber Figur 1 veränderten Schaltzustand, wie er vor dem in Figur 1 gezeigten Schaltzustand bestanden haben könnte.
- Figur 3: zeigt das Beispiel des aus Figur 1 bekannten Koppelfeldes mit einem gegenüber Figur 1 veränderten Schaltzustand, bei dem das erfindungsgemäße Verfahren vorteilhaft angewendet worden ist.

Bei "Multicast-Verbindungen" werden mehr Ausgänge als Eingänge eines Schaltmodules benutzt. Andererseits werden bei "Merge-Verbindungen" mehr Ein- als Ausgänge eines Schaltmodules benötigt. "Merge-" und "Multicast-Verbindungen" belasten ein Schaltmodul also bezüglich der Anzahl seiner genutzten Ein- und Ausgänge in entgegengesetzter Weise unsymmetrisch. Im folgenden werden die Begriffe "Symmetrie" und "Unsymmetrie" im Zusammenhang mit der Anzahl genutzter Ein- und Ausgänge eines Schaltmodules verwendet. Es wird nun erfindungsgemäß vorgeschlagen, eine möglichst gleich große, symmetrische Anzahl von Eingängen und von Ausgängen eines Schaltmodules für Verbindungen zu nutzen, indem für eine "Merge-Verbindung" ein Schaltmodul mit einer unsymmetrisch höheren Belastung der Ausgänge und für eine "Multicast-Verbindung" ein Schaltmodul mit einer unsymmetrisch höheren Belastung der Eingänge gewählt wird. Dazu wird in vorteilhafter Weise ein Unsymmetrieparameter für jedes Schaltmodul geführt, auf den sich "Merge-" und ,,Multicast-Verbindungen" umgekehrt proportional auswirken. Es könnte sich bei dem Unsymmetrieparameter z.B. um eine Zahl handeln, die jeweils um die um die Differenz zwischen den Anzahlen genutzter Ein- und Ausgänge bei "Merge-Verbindungen" vergrößert bzw. bei "Multicast-Verbindungen" verkleinert wird. Eine symmetrische Belastung eines Schaltmodules wird dann erreicht, wenn dieser Unsymmetrieparameter dem Betrage nach möglichst klein gehalten wird. Andere Vorgehensweisen zur Bildung des Unsymmetrieparameters sind möglich, werden aber hier nicht näher erläutert. Es könnte z.B. die Anzahl zu belegender Ein- und Ausgänge und bereits belegter Ein- und Ausgänge eines Schaltmodules durch je einen zweidimensionalen Vektor dargestellt werden, deren Differenzvektor aus zwei möglichst gleich großen Elementen bestehen soll.

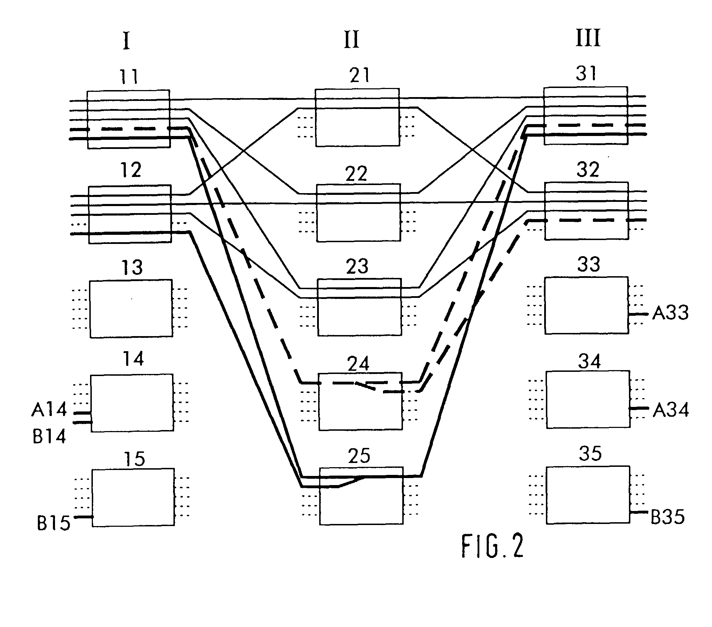

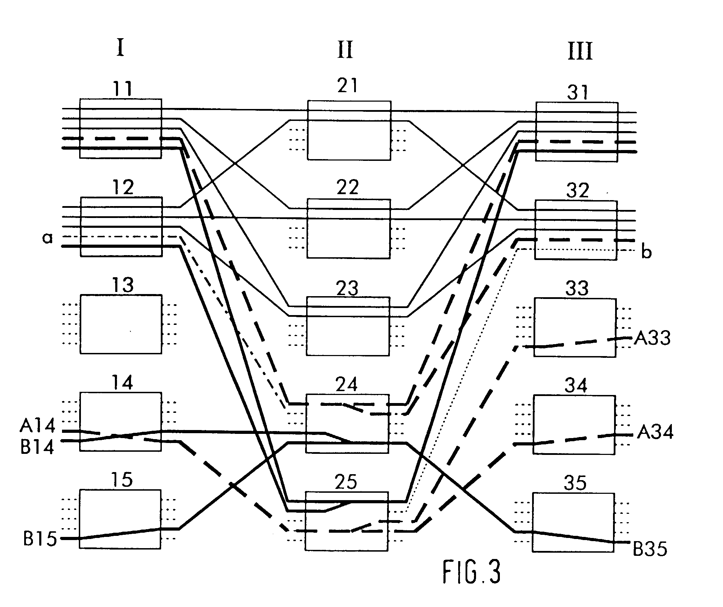

Im folgenden wird zunächst die Anwendung des erfindungsgemäßen Verfahrens dargestellt anhand einer Fortentwicklung des Schaltzustandes von Figur 2 in den Schaltzustand in Figur 3. Beide Figuren zeigen das Beispiel des aus Figur 1 bekannten Koppelfeldes mit jeweils veränderten Schaltzuständen. Der Schaltzustand in Figur 2 stellt eine mögliche Vorstufe der Schaltzustände von Figur 1 oder Figur 3 dar und kann ohne besonderes Zutun sowohl in den ungünstigen Schaltzustand von Figur 1 münden als auch vorteilhaft durch Anwendung des erfindungsgemäßen Verfahrens in den Schaltzustand von Figur 3 weiterentwickelt werden.

In Figur 2 splittet das Schaltmodul 24 die Multicast-Verbindung von Schaltmodul 11 zu den Schaltmodul 31 und 32 auf. Dadurch ergibt sich ausgangsseitig eine unsymmetrisch höhere Belastung und aus der Differenz von einem belegten Eingang und zwei belegten Ausgängen ein Unsymmetrieparameter mit dem Wert minus eins. Das Schaltmodul 25 ist eingangsseitig unsymmetrisch höher belastet und hat einen Unsymmetrieparameter mit dem Wert plus eins, gebildet aus der Differenz von zwei belegten Eingängen und einem belegten Ausgang.

Nun soll von dem Koppelfeld eine "Merge-Verbindung" zwischen Eingängen B14 und B15 und dem Ausgang B35, im folgenden als "Merge-Verbindung B" bezeichnet, hergestellt werden. Erfindungsgemäß wird für eine symmetrische Belastung der Schaltmodule gesorgt. Die besagte eingangsseitig höher belastende "Merge-Verbindung" soll von einem Schaltmodul zusammengeführt werden, das durch "Multicast-Verbindungen" ausgangsseitig unsymmetrisch höher belastet ist. Deshalb wird nach dem erfindungsgemäßen Verfahren die "Merge-Verbindung B" über das Schaltmodul 24 geführt. Der Unsymmetrieparameter von Schaltmodul 24 nimmt dann den Wert null an, da wegen der neu etablierten "Merge-Verbindung B" zum bisherigen Wert minus eins der Wert plus eins addiert wird, nämlich die Differenz von zwei belegten Eingängen und einem belegten Ausgang.

Weiterhin soll das Koppelfeld in Figur 2 den Eingang A14 mit den Ausgängen A33 und A34 durch eine "Multicast-Verbindung", im folgenden als "Multicast-Verbindung A" bezeichnet, verbinden. Die "Multicast-Verbindung A" belastet das aufsplittende Schaltmodul ausgangsseitig unsymmetrisch und beeinflußt dessen Unsymmetrieparameter durch die Addition des Wertes plus 1, der Differenz von einem belegten Eingang und zwei belegten Ausgängen. Erfindungsgemäß soll die "Multicast-Verbindung A" von einem Schaltmodul aufgesplitten werden, das durch "Merge-Verbindungen" eingangsseitig unsymmetrisch höher belastet ist. Deshalb wird die "Multicast-Verbindung A" über das Schaltmodul 25 geführt, so daß dort die gleichen Anzahlen von Ein- und Ausgängen lastführend sind und der Unsymmetrieparameter von Schaltmodul 25 durch Addition des Wertes plus eins zu null wird.

Die erfindungsgemäß hergestellten und oben beschriebenen "Multicast-Verbindung A" und "Merge-Verbindung B" sind in Figur 3 dargestellt. Nach außen hin weist das Koppelfeld in Figur 3 eine gegenüber Figur 1 unveränderte Beziehung zwischen den Eingangsschnittstellen der Eingangsstufe (I) und den Ausgangsschnittstellen der Ausgangsstufe (III) auf, d.h. es sind in Figur 1 und in Figur 3 dieselben Eingänge von Schaltmodulen der Eingangsstufe (I) über koppelfeldinterne Verbindungen mit denselben Ausgängen von Schaltmodulen der Ausgangsstufe (III) verbunden.

Die im Zusammenhang mit Figur 1 eingangs erwähnte Verbindung a, die dort von Schaltmodul 12 über Schaltmodul 24 zu Schaltmodul 35 führen kann und nur auf dessen vier Ausgänge schaltbar ist, ist auch in Figur 3 wieder dargestellt. Dort könnte jedoch die Verbindung a sowohl auf die freien Ausgänge des Schaltmodules 33 als auch des Schaltmodules 34 weitergeführt werden. Insgesamt sind dann für den Eingang der Verbindung a acht Ausgänge des Koppelfeldes erreichbar. Die Blockierungswahrscheinlichkeit ist damit gegenüber dem Schaltzustand in Figur 1 halbiert.

Auch die einleitend genannte Verbindung von Schaltmodul 25 zum Ausgang b ist in Figur 3 wieder aufgegriffen. Durch den Schaltzustand in Figur 3 kann der Ausgang b nunmehr von den fünf Eingängen des Schaltmodules 13 und zusätzlich von den vier freien Eingängen des Schaltmodules 15 erreicht werden. Hier ist die Blockierungswahrscheinlichkeit im Verhältnis fünf zu neun verringert, also ebenfalls nahezu halbiert.

Neben der beschriebenen Fortentwicklung des Schaltzustandes wie in Figur 2 in den Schaltzustand wie in Figur 3 ist es mit dem erfindungsgemäßen Verfahren auch möglich, den Schaltzustand aus Figur 1 in den Schaltzustand der Figur 3 im Rahmen eines sogenannten ,,Rearrangements" zu überführen. Bei einem solchen "Rearrangement" wird für eine umzugruppierende Verbindung zunächst innerhalb des Koppelfeldes ein paralleler Verbindungspfad über andere Schaltmodule hergestellt, auf den nach Überprüfung seiner Funktionsfähigkeit umgeschaltet wird. Dann wird der bisherige Verbindungspfad freigegeben. Ein ,,Rearrangement" des in Figur 1 dargestellten Schaltzustandes wird im folgenden beschrieben.

Bei einem "Rearrangement" nach dem erfindungsgemäßen Verfahren werden zunächst die unsymmetrisch belasteten Schaltmodule in einem Koppel netz ermittelt, in Figur 1 sind dies die Schaltmodule 24 und 25. Dann wird festgestellt, ob die Unsymmetrie in diesen Schaltmodulen verringert werden kann, indem unsymmetrisch belastende Verbindungen in andere Schaltmodule ausgelagert und weiterhin die eigene Unsymmetrie ausgleichende Verbindungen von anderen Schaltmodulen übernommen werden können. Diese Analyse ergibt für den Schaltzustand in Figur 1, daß in Schaltmodul 24 eine "Multicast-" durch eine "Merge-Verbindung" und in Schaltmodul 25 eine "Merge-" durch eine "Multicast-Verbindung" ersetzt werden muß. Die Unsymmetrie in Schaltmodul 24 wird durch Umlegen der "Multicast-Verbindung A" auf das Schaltmodul 23 reduziert und zugleich die Möglichkeit geschaffen, eine "Merge-Verbindung" über das Schaltmodul 24 zu führen, die dessen dann noch vorhandene Unsymmetrie kompensieren kann. Dazu wird die "Merge-Verbindung B" in einem weiteren Schritt von Schaltmodul 25 auf Schaltmodul 24 umgeordnet. In einem abschließenden Schritt werden die Unsymmetrien in den Schaltmodulen 23 und 25 beseitigt, indem die ,,Multicast-Verbindung A" von Schaltmodul 23 auf Schaltmodul 25 verlagert wird. Es ergibt sich dann ein Schaltzustand, wie in Figur 3 gezeigt, mit seinen bereits beschriebenen Vorteilen.

Wie oben aufgezeigt, ist ein "Rearrangement" aufwendig und insbesondere bei Crossconnects in der SDH-Technik sehr zeitintensiv. Deshalb ist es besonders vorteilhaft, von vornherein den Schaltzustand durch das oben anhand von Figur 2 und 3 beschriebene, erfindungsgemäße Verfahren so zu gestalten, daß damit die Blockierungswahrscheinlichkeit und folglich die Wahrscheinlichkeit für ein "Rearrangement" gering gehalten wird.

Das erfindungsgemäße Verfahren läßt sich auf beliebige Koppelfelder anwenden. Denn bei der Darstellung der Ausführungsbeispiele und den Figuren handelt es sich um Prinzipdarstellungen.

Für das erfindungsgemäße Verfahren ist es weiterhin nicht relevant, daß alle Schaltmodule einer Stufe den Aufbau von "Merge-" und "Multicast-Verbindungen" erlauben, denn schon bei zweien solcher Schaltmodule in einer Stufe kann in der erfindungsgemäßen Weise vorgegangen werden.

Falls eine weitere Erhöhung der Übertragungssicherheit mehr als zwei redundante Übertragungswege erfordert, kann das erfindungsgemäße Verfahren auch für den Aufbau solcher Verbindungen angewendet werden.

Die Aufspaltung oder Zusammenkopplung von Übertragungswegen in Koppelfeldern im Zusammenhang mit einer Erhöhung der Übertragungssicherheit ist ebenfalls nur eine beispielhafte Anwendung des erfindungsgemäßen Verfahrens. Auch z.B. beim Aufbau von Konferenzschaltungen könnte in erfindungsgemäßer Weise vorgegangen werden.

## Patentansprüche

1. Verfahren zum Aufbau von Punkt-zu-Mehrpunkt-Verbindungen (A14, A33, A34) und Mehrpunkt-zu-Punkt-Verbindungen (B14, B15, B35) in einem Koppelfeld, das aus einer Mehrzahl von Stufen (I, II, III) mit jeweils einer Mehrzahl von Schaltmodulen (1 1-15, 21-25, 31-35) mit jeweils einer Mehrzahl miteinander wahlfrei verschaltbarer Ein- und Ausgänge besteht, **dadurch gekennzeichnet, da**ß dann, wenn im Koppelfeld in mindestens einer Stufe (II) Schaltmodule (21-25) vorhanden sind, die bauartbedingt zugleich Punkt-zu-Mehrpunkt-Verbindungen (A14, A33, A34) aufsplitten als auch Mehrpunkt-zu-Punkt-Verbindungen (B14, B15, B35) zusammenkoppeln können, Punkt-zu-Mehrpunkt-Verbindungen (A14, A33, A34) von denjenigen Schaltmodulen (25) aufgesplittet werden, bei denen bereits mehr Eingänge als Ausgänge mit Verbindungen belastet sind und daß Mehrpunkt-zu-Punkt-Verbindungen (B14, B15, B35) von denjenigen Schaltmodulen (24) zusammengekoppelt werden, bei denen bereits mehr Ausgänge als Eingänge mit Verbindungen belastet sind.

2. Koppelfeld, das eine Mehrzahl von Stufen (I, II, III) mit jeweils einer Mehrzahl von Schaltmodulen (1 1-15, 21-25, 31-35) mit jeweils einer Mehrzahl miteinander wahlfrei verschaltbarer Ein- und Ausgänge und eine Steuereinrichtung enthält, **dadurch gekennzeichnet**, **daß** im Koppelfeld in mindestens einer Stufe (II) Schaltmodule (21-25) vorhanden sind, die bauartbedingt zugleich Punkt-zu-Mehrpunkt-Verbindungen (A14, A33, A34) aufsplitten als auch Mehrpunkt-zu-Punkt-Verbindungen (B14, B15, B35) zusammenkoppeln können und daß die Steuereinrichtung Punkt-zu-Mehrpunkt-Verbindungen (A14, A33, A34) von denjenigen Schaltmodulen (25) aufsplitten läßt, bei denen bereits mehr Eingänge als Ausgänge mit Verbindungen belastet sind und Mehrpunkt-zu-Punkt-Verbindungen (B14, B15, B35) von denjenigen Schaltmodulen (24) zusammenkoppeln läßt, bei denen bereits mehr Ausgänge als Eingänge mit Verbindungen belastet sind.

3. Steuereinrichtung für ein Koppelfeld, das eine Mehrzahl von Stufen (I, II, III) mit jeweils einer Mehrzahl von Schaltmodulen (1 1-15, 21-25, 31-35) mit jeweils einer Mehrzahl miteinander wahlfrei verschaltbarer Ein- und Ausgänge enthält, **dadurch gekennzeichnet, daß** die Steuereinrichtung in einem solchen Koppelfeld, in dem in mindestens einer Stufe (II) Schaltmodule (21-25) vorhanden sind, die bauartbedingt zugleich Punkt-zu-Mehrpunkt-Verbindungen (A14, A33, A34) aufsplitten als auch Mehrpunkt-zu-Punkt-Verbindungen (B14, B15, B35) zusammenkoppeln können, Punkt-zu-Mehrpunkt-Verbindungen (A14, A33, A34) von denjenigen Schaltmodulen (25) aufsplitten läßt, bei denen bereits mehr Eingänge als Ausgänge mit Verbindungen belastet sind und Mehrpunkt-zu-Punkt-Verbindungen (B14, B15, B35) von denjenigen Schaltmodulen (24) zusammenkoppeln läßt, bei denen bereits mehr Ausgänge als Eingänge mit Verbindungen belastet sind.

4. Vermittlungsstelle mit einem Koppelfeld, das eine Mehrzahl von Stufen (I, II, III) mit jeweils einer Mehrzahl von Schaltmodulen (11-15, 21-25, 31-35) mit jeweils einer Mehrzahl miteinander wahlfrei verschaltbarer Ein- und Ausgänge und eine Steuereinrichtung enthält, **dadurch gekennzeichnet, daß** die Steuereinrichtung in einem solchen Koppelfeld, in dem in mindestens einer Stufe (II) Schaltmodule (21-25) vorhanden sind, die bauartbedingt zugleich Punkt-zu-Mehrpunkt-Verbindungen (A14, A33, A34) aufsplitten als auch Mehrpunkt-zu-Punkt-Verbindungen (B14, B15, B35) zusammenkoppeln können, Punkt-zu-Mehrpunkt-Verbindungen (A14, A33, A34) von denjenigen Schaltmodulen (25) aufsplitten läßt, bei denen bereits mehr Eingänge als Ausgänge mit Verbindungen belastet sind und Mehrpunkt-zu-Punkt-Verbindungen (B14, B15, B35) von denjenigen Schaltmodulen (24) zusammenkoppeln läßt, bei denen bereits mehr Ausgänge als Eingänge mit Verbindungen belastet sind.

5. Verfahren nach Anspruch 1, dadurch gekennzeichnet, daß für Schaltmodule (21-25), die zugleich Punkt-zu-Mehrpunkt-Verbindungen (A14, A33, A34) als auch Mehrpunkt-zu-Punkt-Verbindungen (B14, B15, B35) schalten können, ein Unsymmetrieparameter als Maß sowohl für die Anzahl mit Verbindungen belasteter Eingänge als auch für die Anzahl mit Verbindungen belasteter Ausgänge dieser Schaltmodule geführt wird.
